# EUROPÄISCHE PATENTSCHRIFT

(11) **EP 4 492 970 B1**
(45) Veröffentlichungstag und Bekanntmachung des Hinweises auf die Patenterteilung: **17.12.2025**
(21) Anmeldenummer: 23710343.7
(22) Anmeldetag: 10.03.2023
(51) Int. Cl.: A01K 31/00, A01K 31/16, A01K 31/22

(54) **HALTUNGSEINRICHTUNG FÜR GEFLÜGELTIERE UND GEFLÜGELSTALL**
DEVICE FOR POULTRY FARMING AND POULTRY HOUSE
DISPOSITIF POUR L'ÉLEVAGE DE VOLAILLES ET POULAILLER

(30) Priorität: 15.03.2022 LU 501665
(43) Veröffentlichungstag der Anmeldung: 22.01.2025
(73) Patentinhaber: Big Dutchman International GmbH, 49377 Vechta (DE)
(72) Erfinder: PUCOSKI, Krste, 49434 Neuenkirchen-Vörden (DE); SKLJAR, Denis, 49356 Diepholz (DE)
(74) Vertreter: Eisenführ Speiser
(86) Internationale Anmeldenummer: PCT/EP2023/056098
(87) Internationale Veröffentlichungsnummer: WO 2023/174801

(56) Entgegenhaltungen:
- CA-C- 1 332 331
- IT-A1- 202000 000 670
- US-A- 3 626 906
- US-A- 4 364 332

## Beschreibung

Die Erfindung betrifft eine Haltungseinrichtung für Geflügeltiere, insbesondere Legehennen, insbesondere für die Volierenhaltung, einen Geflügeltierstall für die Haltung von Geflügeltieren, insbesondere Legehennenstall, Verfahren zum Halten von Geflügeltieren, insbesondere Legehennen, sowie die Verwendung einer Haltungseinrichtung.

Haltungseinrichtungen für Geflügeltiere, insbesondere Legehennen, insbesondere für die Volierenhaltung, unterschiedlicher Art und Anordnung sind bekannt. DE 20 2007 015 498 U1 beispielsweise beschreibt eine Haltungseinrichtung mit einem zentral angeordneten Eierkanal und wechselseitig zugängliche Nester.

Allerdings sind weitere Verbesserungen wünschenswert, insbesondere im Hinblick auf das Tierwohl und/oder eine einfache Konstruktion und/oder eine bessere Flächennutzung.

Es ist daher eine Aufgabe der vorliegenden Erfindung, eine Haltungseinrichtung für Geflügeltiere, insbesondere Legehennen, insbesondere für die Volierenhaltung, einen Geflügeltierstall für die Haltung von Geflügeltieren, insbesondere Legehennenstall, ein Verfahren zum Halten von Geflügeltieren, insbesondere Legehennen, sowie die Verwendung einer Haltungseinrichtung bereitzustellen, die gegenüber existierenden Lösungen verbessert sind.

Diese Aufgabe wird erfindungsgemäß gelöst durch eine Haltungseinrichtung für Geflügeltiere, insbesondere Legehennen, insbesondere für die Volierenhaltung, umfassend eine Tieraufenthaltsfläche, die durch einen mittig angeordneten Neststreifen in einen ersten Teilaufenthaltsbereich und einen zweiten Teilaufenthaltsbereich getrennt ist, wobei der Neststreifen eine erste Nestanordnung mit einem ersten Eierkanal und eine zweite Nestanordnung mit einem zweiten Eierkanal aufweist.

Diese Anordnung mit einem mittig angeordneten Neststreifen mit zwei Nestanordnungen, zwei Eierkanälen und zwei Teilaufenthaltsbereichen hat verschiedene Vorteile. Zum einen wird hierdurch eine kompakte Struktur im Neststreifen geschaffen, sodass die Eier über weniger verschmutzte Bereiche und kürzere Abrollwege abrollen müssen. Dies führt zu einer besseren Eiqualität, da die Eier auf diese Weise weniger stark verschmutzt und weniger stark beschädigt werden, etwa durch Hindernisse während des Abrollens. Zudem ermöglicht diese Anordnung mit dem zentralen Neststreifen mit zwei Nestanordnungen und zwei Eierkanälen eine einfache und verbesserte Nutzung der beiden Teilaufenthaltsbereiche für Einrichtungen wie Futtervorrichtungen, Tränken und Sitzstangen. Ferner bietet die hier beschriebene Anordnung mit zwei getrennten Eierkanälen den Vorteil, dass die Eierkanäle im Bereich hinter der jeweiligen Nestanordnung für Geflügeltiere als Nutzfläche zugänglich sind und so die verfügbare Fläche insgesamt besser genutzt werden kann.

Diese Anordnung trägt in vorteilhafter Weise dazu bei, einen effizienten Eiertransport aus den beiden Nestanordnungen über getrennte Eierkanäle zu realisieren und gleichzeitig eine einfache, und die Raumnutzung verbessernde Lösung zu finden.

Ferner beruht die hier beschriebene Lösung u.a. auf folgenden Erkenntnissen. Bei Anordnungen mit einem zentralen Eierkanal beispielsweise ist der Eierkanal für Geflügeltiere unzugänglich und kann daher nicht als Nutzfläche für die Geflügeltiere dienen. Ferner ist der Eierkanal dabei auch für Kontrolle und Reinigung schwer zugänglich. In einer Anordnung mit einem seitlichen Eierkanal hingegen ist das Nest nur über den Eierkanal hinweg zugänglich. Der Eierkanal muss daher abgedeckt sein und die Geflügeltiere betreten die gesamte Nestreihe von Einzelnestern von einer Seite aus über diesen oft stark verschmutzen Bereich. Die in der DE 20 2007 015 498 U1 beschriebenen wechselseitigen Nester mit zentralem Eierkanal haben den Nachteil, dass der Platzbedarf in Stallbreite identisch ist mit dem Platzbedarf einer Anordnung mit einem Doppelnest (d.h. einer Anordnung mit von unterschiedlichen Seiten zugänglichen Einzelnestern), obwohl in der DE 20 2007 015 498 U1 nur maximal halb so viel Nestfläche geschaffen wird. Ein großer Teil der Stallbreite geht bei der DE 20 2007 015 498 U1 daher planerisch für lineare Einrichtungen wie Futterlinien oder Tränken verloren. Ferner muss auch hier der gesamte Eierkanal abgedeckt werden, um als Fläche für die Tiere nutzbar zu sein.

Gemäß einer bevorzugten Ausführungsform ist vorgesehen, dass der erste Eierkanal zwischen der ersten Nestanordnung und dem zweiten Teilaufenthaltsbereich angeordnet ist, und/oder der zweite Eierkanal zwischen der zweiten Nestanordnung und dem ersten Teilaufenthaltsbereich angeordnet ist.

Die Eierkanäle befinden sich somit vorzugsweise an den beiden Kanten des Neststreifens, dort wo der Neststreifen an die Teilaufenthaltsbereiche grenzt.

In einer weiteren bevorzugten Ausführungsform ist vorgesehen, dass der erste Eierkanal und der zweite Eierkanal parallel zueinander und/oder parallel zur Längsrichtung des Neststreifens verlaufen.

Eine weitere bevorzugte Fortbildung zeichnet sich dadurch aus, dass ein Abdeckabschnitt des ersten Eierkanals mit einer ersten Abdeckung versehen ist, wobei vorzugsweise die erste Abdeckung teilweise von der ersten Nestanordnung und teilweise von einem Abdeckboden gebildet ist, wobei vorzugsweise der Abdeckboden ausgebildet ist, als Nutzfläche für die Geflügeltiere zu dienen. Ferner ist vorzugsweise vorgesehen, dass ein Abdeckabschnitt des zweiten Eierkanals mit einer zweiten Abdeckung versehen ist, wobei vorzugsweise die zweite Abdeckung teilweise von der zweiten Nestanordnung und teilweise von einem Abdeckboden gebildet ist, wobei vorzugsweise der Abdeckboden ausgebildet ist, als Nutzfläche für die Geflügeltiere zu dienen.

Die Abdeckabschnitte der Eierkanäle sind vorzugsweise angrenzend, benachbart und/oder überlappend mit den jeweiligen Rückseiten der Nestanordnungen angeordnet. Vorzugsweise rollen Eier aus den Nestanordnungen in Richtung der Rückseiten ab und gelangen von dort in den jeweiligen Eierkanal. Die Eierkanäle können hierzu seitlich angrenzend an die jeweiligen Rückseiten der Nestanordnungen angeordnet sein, oder auch nach unten und/oder innen versetzt teilweise unterhalb der jeweiligen Nestanordnung angeordnet sein und sich von dort aus seitlich erstrecken. Der Abdeckboden ist vorzugsweise jeweils derart ausgebildet, dass der den nicht von der jeweiligen Nestanordnung abgedeckten Bereich des Abdeckabschnitts des jeweiligen Eierkanals abdeckt.

Ein Boden der ersten Nestanordnung und/oder ein Boden der zweiten Nestanordnung ist bzw. sind vorzugsweise von der Zugangsseite der jeweiligen Nestanordnung zu einer Rückseite der jeweiligen Nestanordnung hin geneigt, vorzugsweise zur Rückseite nach unten hin geneigt.

Eine Neigung, insbesondere einen gleichmäßigen Neigung des ersten und/oder zweiten Teilaufenthaltsbereichs bedeutet insbesondere, dass die jeweiligen Teilaufenthaltsbereiche keine Stufen oder Knicke zwischen Bereichen mit unterschiedlichen Neigungen aufweisen, sondern vielmehr eine durchgängige Fläche in einer Ebene bilden, die gegenüber einer horizontalen Ebene geneigt ist. Dies hat den Vorteil, dass außerhalb des Nests im Teilaufenthaltsbereich gelegte Eier abrollen können, ohne gegebenenfalls durch Stufen oder Knicke beschädigt zu werden.

Gemäß einer bevorzugten Ausführungsform ist vorgesehen, dass ein Unterabschnitt des ersten Eierkanals ganz oder teilweise unterhalb der zweiten Nestanordnung, und/oder dass ein Unterabschnitt des zweiten Eierkanals ganz oder teilweise unterhalb der ersten Nestanordnung.

Hierin liegt der Vorteil, dass in den Unterabschnitten der Eierkanäle keine separate Abdeckung vorgesehen sein muss. Vielmehr ermöglicht diese Lösung, dass im Bereich der Unterabschnitte die verfügbare Fläche doppelt genutzt wird, in dem die Unterabschnitte unterhalb der Nestanordnungen angeordnet sind, insbesondere in einem Bereich angrenzend an die Zugangsseite der jeweiligen Nestanordnung. Diese Flächen stehen den Geflügeltieren also als Nestflächen zur Verfügung, und die darunter liegenden Unterabschnitte der Eierkanäle verbrauchen keine zusätzliche Fläche. Dies hat unter anderem den Vorteil, dass der zur Verschmutzung neigende Bereich des Eierkanals bzw. der Eierkanäle, der, vorzugsweise plangeschlossen, abgedeckt ist, nur 50% so groß ist wie bei einem gleich großen wechselseitigen Nest mit zentralem Eierkanal.

In einer weiteren bevorzugten Ausführungsform ist vorgesehen, dass die erste Nestanordnung und die zweite Nestanordnung von unterschiedlichen, vorzugsweise gegenüberliegenden, Zugangsseiten aus für Geflügeltiere zugänglich sind, wobei vorzugsweise die Zugangsseite der ersten Nestanordnung dem ersten Teilaufenthaltsbereich zugewandt ist und/oder die Zugangsseite der zweiten Nestanordnung dem zweiten Teilaufenthaltsbereich zugewandt ist.

Vorzugsweise ist eine Rückseite der ersten Nestanordnung dem zweiten Teilaufenthaltsbereich und/oder grenzt an den zweiten Teilaufenthaltsbereich an. Ferner vorzugsweise ist eine Rückseite der zweiten Nestanordnung dem ersten Teilaufenthaltsbereich und/oder grenzt an den ersten Teilaufenthaltsbereich an.

Vorzugsweise können also die Geflügeltiere die erste Nestanordnung aus dem ersten Teilaufenthaltsbereich heraus betreten und/oder die zweite Nestanordnung aus dem zweiten Teilaufenthaltsbereich heraus.

Vorzugsweise liegen die Rückseiten der jeweiligen Nestanordnungen den Zugangsseiten der jeweiligen Nestanordnungen gegenüber
Die jeweiligen Abdeckabschnitte der beiden Eierkanäle erstrecken sich vorzugsweise entlang einer der Rückseite der jeweiligen Nestanordnung.

Ferner vorzugsweise weist der erste Teilaufenthaltsbereich eine oder mehrere Futtervorrichtungen und/oder eine oder mehrere Tränken und/oder eine oder mehrere Sitzstangen auf. Ferner vorzugsweise weist der zweite Teilaufenthaltsbereich eine oder mehrere Futtervorrichtungen und/oder eine oder mehrere Tränken und/oder eine oder mehrere Sitzstangen auf.

Gemäß einer bevorzugten Ausführungsform ist vorgesehen, dass die erste Nestanordnung und die zweite Nestanordnung in Längsrichtung des Neststreifens hintereinander angeordnet und/oder voneinander beabstandet sind, vorzugsweise durch einen Durchgang, wobei der Durchgang vorzugsweise eine Durchgangsabdeckung aufweist, insbesondere eine Durchgangsabdeckung für Durchgangsabschnitte des ersten Eierkanals und/oder des zweiten Eierkanals, wobei vorzugsweise die Durchgangsabdeckung ausgebildet ist, als Nutzfläche für die Geflügeltiere zu dienen.

Zwischen den beiden Nestanordnungen erstrecken sich vorzugsweise Durchgangsabschnitte der Eierkanäle, die vorzugsweise durch eine Durchgangsabdeckung abgedeckt sind. Über den Durchgang können sich vorzugsweise sowohl die Geflügeltiere vom ersten Teilaufenthaltsbereich in den zweiten Teilaufenthaltsbereich und umgekehrt bewegen. Ferner ist es bevorzugt, dass über den Durchgang sich auch Personal vom ersten Teilaufenthaltsbereich in den zweiten Teilaufenthaltsbereich und umgekehrt bewegen kann.

Ferner ist vorzugsweise vorgesehen, dass der erste Teilaufenthaltsbereich zum Neststreifen hin geneigt ist. Es ist ferner bevorzugt, dass der zweite Teilaufenthaltsbereich zum Neststreifen hin geneigt ist. Dies ist bevorzugt, um ein Abrollen von in den Teilaufenthaltsbereichen gelegten Eiern zum Neststreifen und den dort angeordneten Eierkanälen hin zu ermöglichen.

Vorzugsweise verlaufen die Eierkanäle mit ihren Durchgangsabschnitten durchgehend auch durch den Durchgang.

Es ist insbesondere bevorzugt, dass der erste Eierkanal angeordnet ist, Eier aus der ersten Nestanordnung und/oder aus dem zweiten Teilaufenthaltsbereich aufzunehmen, vorzugsweise durch einen Eiaufnahmespalt. Ferner ist vorzugsweise vorgesehen dass der erste Eierkanal unterhalb eines unteren Endes des ersten Teilaufenthaltsbereich und/oder unterhalb eines unteren Endes des zweiten Teilaufenthaltsbereich angeordnet ist.

Es ist weiter bevorzugt, dass der zweite Eierkanal angeordnet ist, Eier aus der zweiten Nestanordnung und/oder aus dem ersten Teilaufenthaltsbereich aufzunehmen, vorzugsweise durch einen Eiaufnahmespalt. Ferner ist vorzugsweise vorgesehen, dass der zweite Eierkanal unterhalb eines unteren Endes des ersten Teilaufenthaltsbereich und/oder unterhalb eines unteren Endes des zweiten Teilaufenthaltsbereich angeordnet ist.

Diese Ausgestaltungen haben den Vorteil, dass Eier, die nicht im Nest, sondern etwa im Bereich vor einem Nesteingang oder in anderen Bereichen der Teilaufenthaltsbereiche gelegt werden (sogenannte "Systemeier"), nicht noch durch ein Nest hindurch auf das Eierband rollen müssen, sondern vom Teilaufenthaltsbereich direkt auf das an diesen Teilaufenthaltsbereich angrenzende Eierband rollen können. Diese Gewinnung von (möglichst unbeschädigten) Systemeiern erhebt die allgemeine Produktivität im Stall. Auch bei einer Ausgestaltung mit geschlossenen Nestern können die Systemeier weiterhin auf Eierband rollen, unabhängig von der Ausführung des Nestes mit oder ohne Austreibsystem, z.B. als Kippboden- oder Austreibklappennest.

Ferner vorzugsweise weist der erste Eierkanal eine erste Fördervorrichtung, vorzugsweise ein Förderband, auf zur Förderung von Eiern in Längsrichtung des Neststreifens. Es ist insbesondere bevorzugt, dass der zweite Eierkanal eine zweite Fördervorrichtung, vorzugsweise ein Förderband, aufweist zur Förderung von Eiern in Längsrichtung des Neststreifens.

In einer weiteren bevorzugten Ausführungsform ist vorgesehen, dass der erste Teilaufenthaltsbereich als Gitterboden ausgebildet ist und/oder eine, vorzugsweise gleichmäßige, Neigung, vorzugsweise nach unten zum Neststreifen hin, aufweist. Ferner vorzugsweise ist der zweite Teilaufenthaltsbereich als Gitterboden ausgebildet und/oder weist eine, vorzugsweise gleichmäßige, Neigung, vorzugsweise nach unten zum Neststreifen hin, auf.

Gemäß einer bevorzugten Ausführungsform ist vorgesehen, dass die erste Nestanordnung ein, zwei oder mehrere Einzel- und/oder Familienlegenester aufweist, und/oder dass die zweite Nestanordnung ein, zwei oder mehrere Einzel- und/oder Familienlegenester aufweist. Ferner vorzugsweise ist bzw. sind eines, mehrere oder alle der Einzel- und/oder Familienlegenester der ersten Nestanordnung und/oder der zweiten Nestanordnung als Kippbodennest und/oder als Nest mit oder ohne Austreibvorrichtung ausgebildet. Weiter ist bevorzugt, dass eines, mehrere oder alle der Einzel- und/oder Familienlegenester der ersten Nestanordnung und/oder der zweiten Nestanordnung einen, vorzugsweise gegenüber dem ersten bzw. zweiten Teilaufenthaltsbereich, erhöhten Nesteingang aufweist bzw. aufweisen.

Ein erhöhter Nesteingang hat den Vorteil, die Attraktivität der Nester für die Geflügeltiere zu erhöhen und/oder sich positiv auf das Tierwohl auszuwirken. Zusammen mit der Anordnung von Unterabschnitten der Eierkanäle unterhalb der jeweiligen Nestanordnungen, insbesondere im Bereich unterhalb von deren Zugangsseiten, ist es ferner vorteilhaft, wenn der sich an der Zugangsseite befindliche Nesteingang erhöht ist und somit Raum unterhalb der Nestanordnungen für die Unterabschnitte der Eierkanäle geschaffen wird.

Eine weitere bevorzugte Weiterbildung ist gekennzeichnet durch mehrere erste und mehrere zweite Nestanordnungen, die jeweils abwechselnd in Längsrichtung des Neststreifens hintereinander angeordnet und/oder voneinander beabstandet sind. Auf diese Weise ist die Haltungseinrichtung gut skalierbar.

Weitere vorteilhafte Ausführungsvarianten der zuvor beschriebenen Haltungseinrichtung ergeben sich durch Kombination einzelner, mehrerer oder aller hier beschriebenen bevorzugten Merkmale.

Gemäß einem weiteren Aspekt der Erfindung wird die eingangs genannte Aufgabe gelöst durch einen Geflügeltierstall für die Haltung von Geflügeltieren, insbesondere Legehennenstall, umfassend eine zuvor beschriebene Haltungseinrichtung.

Gemäß einem weiteren Aspekt der Erfindung wird die eingangs genannte Aufgabe gelöst durch ein Verfahren zum Halten von Geflügeltieren, insbesondere Legehennen, umfassend: Bereitstellen einer zuvor beschriebenen Haltungseinrichtung in einem Geflügeltierstall, insbesondere in einem Legehennenstall, Sammeln von Eiern in dem ersten Eierkanal und/oder in dem zweiten Eierkanal.

Das zuvor beschriebene Verfahren und seine möglichen Fortbildungen weisen insbesondere Merkmale bzw. Verfahrensschritte auf, die sie insbesondere dafür geeignet machen, mit einer zuvor beschriebenen Haltungseinrichtung und ihren Fortbildungen verwendet zu werden.

Gemäß einem weiteren Aspekt der Erfindung wird die eingangs genannte Aufgabe gelöst durch die Verwendung einer zuvor beschriebenen Haltungseinrichtung, zur Haltung von Geflügeltieren, insbesondere Legehennen, in einem Geflügeltierstall, vorzugsweise in einem zuvor beschriebenen Geflügeltierstall und/oder in einem Verfahren zum Halten von Geflügeltieren, insbesondere Legehennen, vorzugsweise in einem zuvor beschriebenen Verfahren.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale

Bevorzugte Ausführungsbeispiele werden beispielhaft anhand der beiliegenden Figuren beschrieben. Es zeigen:

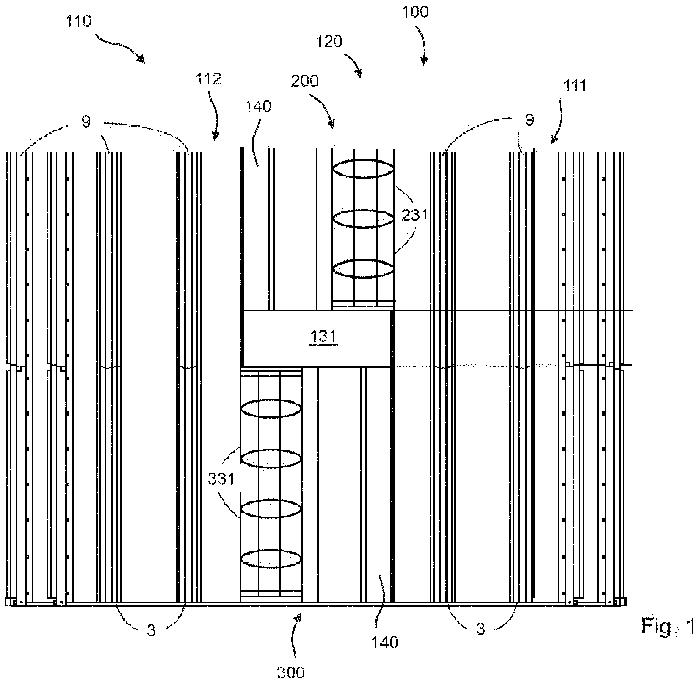

- Figur 1:: eine schematische dreidimensionale Darstellung einer Haltungseinrichtung für Geflügeltiere;

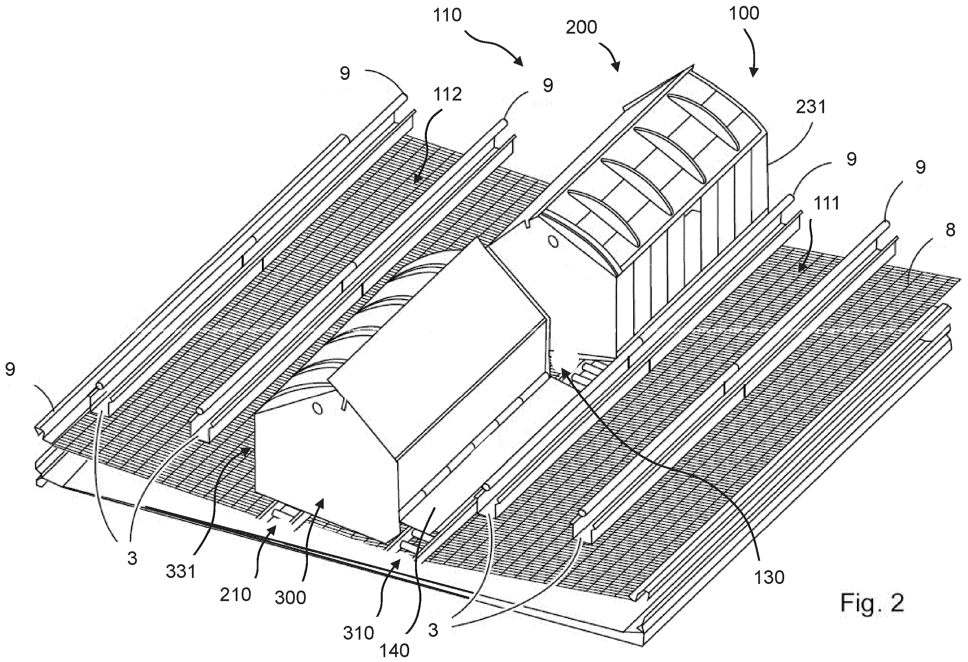

- Figur 2:: eine Draufsicht auf die Haltungseinrichtung nach Figur 1;

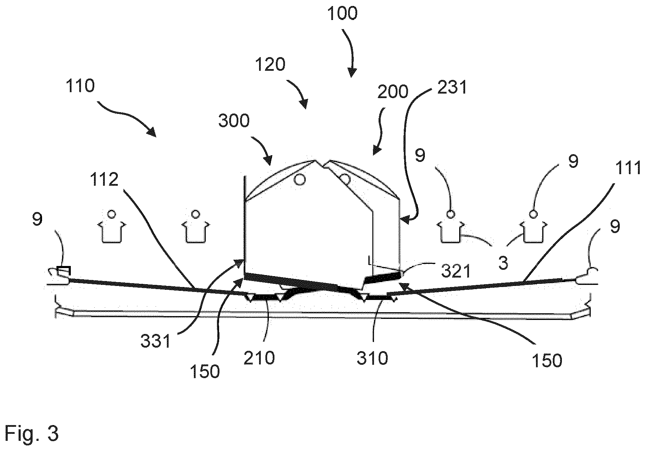

- Figur 3:: eine Seitenansicht der Haltungseinrichtung nach Figur 1;

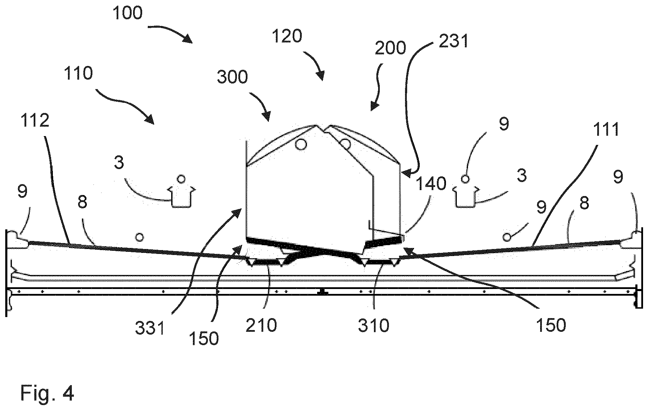

- Figur 4:: eine weitere Seitenansicht einer Haltungseinrichtung.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind

In den Figuren ist eine Haltungseinrichtung 100 für Geflügeltiere, insbesondere Legehennen, insbesondere für die Volierenhaltung abgebildet. Die Haltungseinrichtung 100 umfasst eine Tieraufenthaltsfläche 110, die durch einen mittig angeordneten Neststreifen 120 in einen ersten Teilaufenthaltsbereich 111 und einen zweiten Teilaufenthaltsbereiche 112 getrennt ist. Die beiden Teilaufenthaltsbereiche 111, 112 sind zum Neststreifen 120 hin geneigt. Ferner weisen beide Teilaufenthaltsbereiche 111, 112 eine hier im Beispiel gleichmäßigen Neigung nach unten zum Neststreifen 120 hin auf.

Ferner sind die beiden Teilaufenthaltsbereiche 111, 112 als Gitterboden 8 ausgebildet. In den Tieraufenthaltsbereichen 111, 112 sind mehrere Futtervorrichtungen 3 in Form von Futtertrögen angeordnet sowie mehrere Sitzstangen 9.

Der Neststreifen 120 weist eine erste Nestanordnung 200 und eine zweite Nestanordnung 300 auf. Die erste und zweite Nestanordnung 200, 300 sind in Längsrichtung des Neststreifens 120 hintereinander angeordnet und voneinander durch einen Durchgang 130 beabstandet. Der Durchgang 130 weist eine Durchgangsabdeckung 131 auf, die als Nutzfläche die Geflügeltiere ausgebildet ist.

Der Durchgang130 zwischen den beiden Nestanordnungen 200, 300 dient insbesondere einer besseren Zugänglichkeit der Nestanordnungen 200, 300 und Teilaufenthaltsbereiche 111, 112 sowohl für die Geflügeltiere als auch für Personal. Eine Abdeckung dieses Durchgangs 130 ist vorteilhaft, damit die im den Eierkanälen 210, 310 transportierten Eier auch in diesem Durchgangsbereich weniger stark verschmutzen und nicht beschädigt werden. Dazu ist die Durchgangsabdeckung 131 vorzugsweise als eine Nutzfläche für die Geflügeltiere ausgebildet. Ferner vorzugsweise ist die Durchgangsabdeckung 131 auch ausgebildet, als Nutzfläche für Personal zu dienen.

Die erste und zweite Nestanordnung 200, 300 weisen vorzugsweise jeweils ein, zwei oder mehrere Einzel-, und/oder Familienlegenester auf. Eines, mehrere oder alle der Einzel- und/oder Familienlegenester können als Kippbodennest und/oder als Nest mit einem Austriebsystem, wie beispielsweise einer Austriebklappe, oder ganz ohne Austriebsystem ausgebildet sein.

Die erste Nestanordnung 200 und die zweite Nestanordnung 300 sind von unterschiedlichen, hier im Beispiel gegenüberliegenden, Zugangsseiten 231, 331 aus für Geflügeltiere zugänglich. Die erste Zugangsseite 231 der ersten Nestanordnung 200 ist dem ersten Teilaufenthaltsbereich 111 zugewandt. Die zweite Zugangsseite 332 der zweiten Nestanordnung 300 ist dem zweiten Teilaufenthaltsbereich 112 zugewandt. Auf diese Weise können Geflügeltiere sowohl vom ersten als auch vom zweiten Teilaufenthaltsbereich 111, 112 aus jederzeit eine der Nestanordnungen 200, 300 aufsuchen, ohne zuvor den Durchgang 130 passieren zu müssen.

Ferner ist es bevorzugt, dass eines, mehrere oder alle der Einzel- und/oder Familienlegenester der ersten und zweiten Nestanordnungen 200, 300 jeweils gegenüber dem ersten bzw. zweiten Teilaufenthaltsbereich 111, 112 erhöht sind, insbesondere deren jeweiliger Nesteingang, der sich vorzugsweise an der jeweiligen Zugangsseite 231, 331 der Nestanordnung befindet. Die ist insbesondere positiv für das Tierwohl wirkt sich ebenfalls positiv auf die Eiqualität aufs und erhöht die Attraktivität der Nester.

Ferner sind die Böden der ersten und zweiten Nestanordnungen 200, 300 von der jeweiligen Zugangsseite 231, 331 zur jeweils gegenüberliegenden Rückseite hin nach unten, vorzugsweise gleichmäßig, geneigt. Auf diese Weise ist es möglich, dass die in den Nestanordnung 200, 300 gelegten Eier innerhalb der Nestanordnung und 200, 300 jeweils nach hinten, d. h. weg von der jeweiligen Zugangsseite 231, 331 abrollen und von dort in den jeweiligen Eierkanal 210, 310 gelangen.

Die erste Nestanordnung 200 weist einen ersten Eierkanal 210 auf, der zwischen der ersten Nestanordnung 200 und den zweiten Teilaufenthaltsbereich 112 angeordnet ist. Der erste Eierkanal 210 ist somit der Zugangsseite 231 der ersten Nestanordnung 200 abgewandt und im Bereich der Rückseite der ersten Nestanordnung 200 an der an den zweiten Teilaufenthaltsbereich 112 angrenzenden Kante des Neststreifens 120 angeordnet.

Die zweite Nestanordnung 300 weist einen zweiten Eierkanal 310 auf, der zwischen der zweiten Nestanordnung 300 und den ersten Teilaufenthaltsbereich 111 angeordnet ist. Der zweite Eierkanal 310 ist somit der Zugangsseite 331 der zweiten Nestanordnung 300 abgewandt und im Bereich der Rückseite der zweiten Nestanordnung 300 an der an den ersten Teilaufenthaltsbereich 111 angrenzenden Kante des Neststreifens 120 angeordnet.

Ferner verlaufen der erste und der zweite Eierkanal 200, 300 parallel zueinander und parallel zur Längsrichtung des Neststreifen zu 120.

Im Folgenden wird die Anordnung des ersten Eierkanals genauer beschrieben. Entsprechendes gilt, mutatis mutandis, auch für die Anordnung des zweiten Eierkanals.

Der erste Eierkanal 210 erstreckt sich vorzugsweise über die gesamte Länge der Haltungseinrichtung 100 und weist verschiedene Abschnitte auf.

In einem Abdeckabschnitt, der vorzugsweise entlang der Erstreckung der erste Nestanordnung 200 verläuft, ist der erste Eierkanal 210 nach unten und leicht nach innen angeordnet, so dass der Abdeckabschnitt teilweise von der ersten Nestanordnung 200 und teilweise vom Abdeckboden 321 abgedeckt ist.

Der erste Eierkanal 210 verläuft durchgängig auch zwischen der ersten Nestanordnung 200 und der zweiten Nestanordnung 300 in einem Durchgangsabschnitt, der vorzugweise von einer Durchgangsabdeckung bedeckt ist.

Der erste Eierkanal 210 verläuft dann in einem Unterabschnitt unterhalb der zweiten Nestanordnung 300, vorzugsweise unterhalb der Zugangsseite 331 bzw. unterhalb des Nesteingangs der zweiten Nestanordnung 300 unterhalb dieser zweiten Nestanordnung 300. Auf diese Weise entfällt eine separate Abdeckung des ersten Eierkanals 210 im Unterabschnitt, indem dieser erste Eierkanal 210 unterhalb der zweiten Nestanordnung 300 verläuft. Auf diese Weise kann zudem die verfügbare Fläche doppelt genutzt werden: Durch das darüberliegende Nest und den darunterliegenden Eierkanal.

In diesem Unterabschnitt ist der erste Eierkanal 210 vorzugsweise nicht für Eier aus den Nestanordnungen zugänglich. Allerdings ist vorzugsweise ein Eiaufnahmespalt 150 zwischen dem ersten Eierkanal 210 und der zweiten Nestanordnung 300, insbesondere deren Nesteingang, vorgesehen, durch den im zweiten Teilaufenthaltsbereich 112 gelegte Eier (auch als Systemeier bezeichnet) in den ersten Eierkanal 210 gelangen können, insbesondere über Abrollen.

Die erste Nestanordnung 200 ist vorzugsweise ausgebildet, dass in der ersten Nestanordnung 200, vorzugsweise in einem rückwärtigen, an deren Rückseite angrenzenden Bereich, gelegte Eier auf den ersten Eierkanal 210 gelangen können. Hierzu kann diese erste Eierkanal 210 ganz oder teilweise unterhalb der ersten Nestanordnung 200 und/oder angrenzend und/oder benachbart an diese angeordnet sein. Der erste Eierkanal 210 kann jedoch auch ganz oder teilweise von einer Abdeckung, insbesondere in Form eines Abdeckbodens 140, abgedeckt sein, wobei der Abdeckboden 140 vorzugsweise an die Rückseite der ersten Nestanordnung 200 anschließt. Auf diese Weise wird auch in diesem Abschnitt eine Verschmutzung und/oder Beschädigung der Eier verhindert oder zumindest reduziert.

Diese Haltungseinrichtung 100 für Geflügeltiere, insbesondere Legehennen, insbesondere für die Volierenhaltung mit zwei mittig angeordneten Nestanordnungen 200, 300 sowie zwei getrennten Eierkanälen für diese Nestanordnung, die abschnittsweise ganz oder teilweise unterhalb der Nestanordnungen 200, 300 verlaufen, ergibt sich eine besonders einfache und platzsparende Lösung.

## Patentansprüche

1. Haltungseinrichtung (100) für Geflügeltiere, insbesondere Legehennen, insbesondere für die Volierenhaltung,
- umfassend eine Tieraufenthaltsfläche (110), die durch einen mittig angeordneten Neststreifen (120) in einen ersten Teilaufenthaltsbereich (111) und einen zweiten Teilaufenthaltsbereich (112) getrennt ist,
- wobei der Neststreifen (120) eine erste Nestanordnung (200) mit einem ersten Eierkanal (210) aufweist,
**dadurch gekennzeichnet, dass**
der Neststreifen (120) ferner eine zweite Nestanordnung (300) mit einem zweiten Eierkanal (310) aufweist.

2. Haltungseinrichtung (100) nach mindestens einem der vorhergehenden Ansprüche,
- **dadurch gekennzeichnet, dass** der erste Eierkanal zwischen der ersten Nestanordnung (200) und dem zweiten Teilaufenthaltsbereich angeordnet ist, und/oder
- **dadurch gekennzeichnet, dass** der zweite Eierkanal zwischen der zweiten Nestanordnung (300) und dem ersten Teilaufenthaltsbereich angeordnet ist, und/oder
- **dadurch gekennzeichnet, dass** der erste Eierkanal und der zweite Eierkanal parallel zueinander und/oder parallel zur Längsrichtung des Neststreifens (120) verlaufen.

3. Haltungseinrichtung (100) nach mindestens einem der vorhergehenden Ansprüche,
- **dadurch gekennzeichnet, dass** ein Abdeckabschnitt des ersten Eierkanals mit einer ersten Abdeckung versehen ist, wobei vorzugsweise die erste Abdeckung teilweise von der ersten Nestanordnung (300) und teilweise von einem Abdeckboden (140) gebildet ist, wobei vorzugsweise der Abdeckboden ausgebildet ist, als Nutzfläche für die Geflügeltiere zu dienen, und/oder
- **dadurch gekennzeichnet, dass** ein Abdeckabschnitt des zweiten Eierkanals mit einer zweiten Abdeckung versehen ist, wobei vorzugsweise die zweite Abdeckung teilweise von der zweiten Nestanordnung (200) und teilweise von einem Abdeckboden gebildet ist, wobei vorzugsweise der Abdeckboden (140) ausgebildet ist, als Nutzfläche für die Geflügeltiere zu dienen.

4. Haltungseinrichtung (100) nach mindestens einem der vorhergehenden Ansprüche,
- **dadurch gekennzeichnet, dass** ein Unterabschnitt (212) des ersten Eierkanals ganz oder teilweise unterhalb der zweiten Nestanordnung (300) verläuft, und/oder
- **dadurch gekennzeichnet, dass** ein Unterabschnitt des zweiten Eierkanals ganz oder teilweise unterhalb der ersten Nestanordnung (200) verläuft.

5. Haltungseinrichtung (100) nach mindestens einem der vorhergehenden Ansprüche,
**dadurch gekennzeichnet, dass** die erste Nestanordnung (200) und die zweite Nestanordnung (300) von unterschiedlichen, vorzugsweise gegenüberliegenden, Zugangsseiten aus für Geflügeltiere zugänglich sind,
wobei vorzugsweise die Zugangsseite (231) der ersten Nestanordnung (200) dem ersten Teilaufenthaltsbereich zugewandt ist und/oder die Zugangsseite (331) der zweiten Nestanordnung (300) dem zweiten Teilaufenthaltsbereich zugewandt ist.

6. Haltungseinrichtung (100) nach mindestens einem der vorhergehenden Ansprüche,
**dadurch gekennzeichnet, dass** die erste Nestanordnung (200) und die zweite Nestanordnung (300) in Längsrichtung des Neststreifens (120) hintereinander angeordnet und/oder voneinander beabstandet sind, vorzugsweise durch einen Durchgang (130), wobei der Durchgang vorzugsweise eine Durchgangsabdeckung (131) aufweist, insbesondere eine Durchgangsabdeckung für Durchgangsabschnitte des ersten Eierkanals und/oder des zweiten Eierkanals, wobei vorzugsweise die Durchgangsabdeckung ausgebildet ist, als Nutzfläche für die Geflügeltiere zu dienen.

7. Haltungseinrichtung (100) nach mindestens einem der vorhergehenden Ansprüche,
- **dadurch gekennzeichnet, dass** der erste Teilaufenthaltsbereich (111) zum Neststreifen (120) hin geneigt ist, und/oder
- **dadurch gekennzeichnet, dass** der erste Teilaufenthaltsbereich (111) eine oder mehrere Futtervorrichtungen (3) und/oder eine oder mehrere Tränken und/oder eine oder mehrere Sitzstangen (9) aufweist, und/oder
- **dadurch gekennzeichnet, dass** der zweite Teilaufenthaltsbereich (112) zum Neststreifen (120) hin geneigt ist, und/oder
- **dadurch gekennzeichnet, dass** der zweite Teilaufenthaltsbereich (112) eine oder mehrere Futtervorrichtungen (3) und/oder eine oder mehrere Tränken und/oder eine oder mehrere Sitzstangen (9) aufweist.

8. Haltungseinrichtung (100) nach mindestens einem der vorhergehenden Ansprüche,
- **dadurch gekennzeichnet, dass** der erste Eierkanal angeordnet ist, Eier aus der ersten Nestanordnung (200) und/oder aus dem zweiten Teilaufenthaltsbereich (112) aufzunehmen, vorzugsweise durch einen Eiaufnahmespalt (150), und/oder
- **dadurch gekennzeichnet, dass** der erste Eierkanal unterhalb eines unteren Endes des ersten Teilaufenthaltsbereich (111) und/oder unterhalb eines unteren Endes des zweiten Teilaufenthaltsbereich (112) angeordnet ist, und/oder
- **dadurch gekennzeichnet, dass** der erste Eierkanal eine erste Fördervorrichtung, vorzugsweise ein Förderband, aufweist zur Förderung von Eiern in Längsrichtung des Neststreifens (120), und/oder
- **dadurch gekennzeichnet, dass** der zweite Eierkanal angeordnet ist, Eier aus der zweiten Nestanordnung (300) und/oder aus dem ersten Teilaufenthaltsbereich (111) aufzunehmen, vorzugsweise durch einen Eiaufnahmespalt (150), und/oder
- **dadurch gekennzeichnet, dass** der zweite Eierkanal unterhalb eines unteren Endes des ersten Teilaufenthaltsbereich (111) und/oder unterhalb eines unteren Endes des zweiten Teilaufenthaltsbereich (112) angeordnet ist, und/oder
- **dadurch gekennzeichnet, dass** der zweite Eierkanal eine zweite Fördervorrichtung, vorzugsweise ein Förderband, aufweist zur Förderung von Eiern in Längsrichtung des Neststreifens (120).

9. Haltungseinrichtung (100) nach mindestens einem der vorhergehenden Ansprüche,
- **dadurch gekennzeichnet, dass** der erste Teilaufenthaltsbereich (111) als Gitterboden (8) ausgebildet ist und/oder eine, vorzugsweise gleichmäßige, Neigung, vorzugsweise nach unten zum Neststreifen (120) hin, aufweist, und/oder
- **dadurch gekennzeichnet, dass** der zweite Teilaufenthaltsbereich (112) als Gitterboden (8) ausgebildet ist und/oder eine, vorzugsweise gleichmäßige, Neigung, vorzugsweise nach unten zum Neststreifen (120) hin, aufweist.

10. Haltungseinrichtung (100) nach mindestens einem der vorhergehenden Ansprüche,
- **dadurch gekennzeichnet, dass** die erste Nestanordnung (200) ein, zwei oder mehrere Einzel- und/oder Familienlegenester aufweist, und/oder
- **dadurch gekennzeichnet, dass** die zweite Nestanordnung (300) ein, zwei oder mehrere Einzel- und/oder Familienlegenester aufweist, und/oder
- **dadurch gekennzeichnet, dass** eines, mehrere oder alle der Einzel- und/oder Familienlegenester der ersten Nestanordnung (200) und/oder der zweiten Nestanordnung (300) als Kippbodennest und/oder als Nest mit oder ohne Austreibvorrichtung ausgebildet ist bzw. sind, und/oder
- **dadurch gekennzeichnet, dass** eines, mehrere oder alle der Einzel- und/oder Familienlegenester der ersten Nestanordnung (200) und/oder der zweiten Nestanordnung (300) einen, vorzugsweise gegenüber dem ersten bzw. zweiten Teilaufenthaltsbereich (111, 112), erhöhten Nesteingang aufweist bzw. aufweisen.

11. Haltungseinrichtung (100) nach mindestens einem der vorhergehenden Ansprüche,
**gekennzeichnet durch** mehrere erste und mehrere zweite Nestanordnungen (200, 300), die jeweils abwechselnd in Längsrichtung des Neststreifens (120) hintereinander angeordnet und/oder voneinander beabstandet sind.

12. Geflügeltierstall für die Haltung von Geflügeltieren, insbesondere Legehennenstall, umfassend eine Haltungseinrichtung (100) nach mindestens einem der vorhergehenden Ansprüche.

13. Verfahren zum Halten von Geflügeltieren, insbesondere Legehennen, umfassend:
- Bereitstellen einer Haltungseinrichtung (100) nach mindestens einem der vorhergehenden Ansprüche in einem Geflügeltierstall, insbesondere in einem Legehennenstall,
- Sammeln von Eiern in dem ersten Eierkanal und/oder in dem zweiten Eierkanal.

14. Verwendung einer Haltungseinrichtung (100) nach mindestens einem der vorhergehenden Ansprüche, zur Haltung von Geflügeltieren, insbesondere Legehennen, in einem Geflügeltierstall, vorzugsweise in einem Geflügeltierstall nach Anspruch 12 und/oder in einem Verfahren zum Halten von Geflügeltieren, insbesondere Legehennen, vorzugsweise in einem Verfahren nach Anspruch 13.

## Claims

1. A housing system (100) for poultry, in particular laying hens, in particular for poultry farming,
- comprising an animal habitation area (110) which is divided into a first partial habitation area (111) and a second partial habitation area (112) by a centrally disposed row of nests (120),
wherein the row of nests (120) has a first nest assembly (200) with a first egg channel (210),
**characterized in that** the row of nests (120) further comprises a second nest assembly (300) with a second egg channel (310).

2. The housing system (100) as claimed in at least one of the preceding claims,
- **characterized in that** the first egg channel is disposed between the first nest assembly (200) and the second partial habitation area, and/or
- **characterized in that** the second egg channel is disposed between the second nest assembly (300) and the first partial habitation area, and/or
- **characterized in that** the first egg channel and the second egg channel run parallel to each other and/or parallel to the longitudinal direction of the row of nests (120).

3. The housing system (100) as claimed in at least one of the preceding claims,
- **characterized in that** a cover section of the first egg channel is provided with a first cover, wherein preferably, the first cover is partly formed by the first nest assembly (300) and partly formed by a cover floor (140), wherein preferably, the cover floor is configured so as to serve as a usable space for the poultry, and/or
- **characterized in that** a cover section of the second egg channel is provided with a second cover, wherein preferably, the second cover is partly formed by the second nest assembly (200) and partly formed by a cover floor, wherein preferably, the cover floor (140) is configured so as to serve as a usable space for the poultry.

4. The housing system (100) as claimed in at least one of the preceding claims,
- **characterized in that** a lower section (212) of the first egg channel runs wholly or partially below the second nest assembly (300), and/or
- **characterized in that** a lower section of the second egg channel runs wholly or partially below the first nest assembly (200).

5. The housing system (100) as claimed in at least one of the preceding claims, **characterized in that** the first nest assembly (200) and the second nest assembly (300) are accessible to poultry from different, preferably opposite access sides, wherein preferably, the access side (231) for the first nest assembly (200) faces the first partial habitation area and/or the access side (331) for the second nest assembly (300) faces the second partial habitation area.

6. The housing system (100) as claimed in at least one of the preceding claims, **characterized in that**, in the longitudinal direction of the row of nests (120), the first nest assembly (200) and the second nest assembly (300) are disposed in succession and/or are separated from one another, preferably by a passageway (130), wherein the passageway preferably has a passageway cover (131), in particular a passageway cover for passageway sections of the first egg channel and/or of the second egg channel, wherein preferably, the passageway cover is configured to serve as a usable space for the poultry.

7. The housing system (100) as claimed in at least one of the preceding claims,
- **characterized in that** the first partial habitation area (111) is inclined towards the row of nests (120), and/or
- **characterized in that** the first partial habitation area (111) has one or more feeding devices (3) and/or one or more drinkers and/or one or more perches (9), and/or
- **characterized in that** the second partial habitation area (112) is inclined towards the row of nests (120), and/or
- **characterized in that** the second partial habitation area (112) has one or more feeding devices (3) and/or one or more drinkers and/or one or more perches (9).

8. The housing system (100) as claimed in at least one of the preceding claims,
- **characterized in that** the first egg channel is disposed to receive eggs from the first nest assembly (200) and/or from the second partial habitation area (112), preferably through an egg receiving gap (150), and/or
- **characterized in that** the first egg channel is disposed below a lower end of the first partial habitation area (111) and/or below a lower end of the second partial habitation area (112), and/or
- **characterized in that** the first egg channel has a first conveying device, preferably a conveyor belt, for conveying eggs in the longitudinal direction of the row of nests (120), and/or
- **characterized in that** the second egg channel is disposed to receive eggs from the second nest assembly (300) and/or from the first partial habitation area (111), preferably through an egg receiving gap (150), and/or
- **characterized in that** the second egg channel is disposed below a lower end of the first partial habitation area (111) and/or below a lower end of the second partial habitation area (112), and/or
- **characterized in that** the second egg channel has a second conveying device, preferably a conveyor belt, for conveying eggs in the longitudinal direction of the row of nests (120).

9. The housing system (100) as claimed in at least one of the preceding claims,
- **characterized in that** the first partial habitation area (111) is configured as a slatted floor (8) and/or has an inclination, preferably a uniform inclination, preferably downwards towards the row of nests (120), and/or
- **characterized in that** the second partial habitation area (112) is configured as a slatted floor (8) and/or has an inclination, preferably a uniform inclination, preferably downwards towards the row of nests (120).

10. The housing system (100) as claimed in at least one of the preceding claims,
- **characterized in that** the first nest assembly (200) has one, two or a plurality of individual and/or family laying nests, and/or
- **characterized in that** the second nest assembly (300) has one, two or a plurality of individual and/or family laying nests, and/or
- **characterized in that** one, a plurality of or all of the individual and/or family laying nests of the first nest assembly (200) and/or of the second nest assembly (300) is or are configured as a tilting floor nest and/or as a nest with our without an ejection device, and/or
- **characterized in that** one, a plurality of or all of the individual and/or family laying nests of the first nest assembly (200) and/or of the second nest assembly (300) has or have a nest entrance which is raised with respect to the first or second partial habitation area (111, 112).

11. The housing system (100) as claimed in at least one of the preceding claims, **characterized by** a plurality of first and a plurality of second nest assemblies (200, 300) which are respectively disposed in alternation in the longitudinal direction of the row of nests (120) in succession and/or separated from one another.

12. A poultry house for holding poultry, in particular a house for laying hens, comprising a housing system (100) as claimed in at least one of the preceding claims.

13. A method for holding poultry, in particular laying hens, comprising:
- providing a housing system (100) in accordance with at least one of the preceding claims in a poultry house, in particular in a house for laying hens,
- collecting eggs in the first egg channel and/or in the second egg channel.

14. Use of a housing system (100) as claimed in at least one of the preceding claims, for holding poultry, in particular laying hens, in a poultry house, preferably in a poultry house as claimed in claim 12 and/or in a method for holding poultry, in particular laying hens, preferably in a method as claimed in claim 13.

## Revendications

1. Dispositif d'élevage (100) pour des volailles, en particulier pour des poules pondeuses, en particulier pour l'élevage en volière,
- comprenant une surface de séjour (110) pour animaux, qui est divisée par une bande de nids (120) placée au centre en une première zone de séjour partielle (111) et en une deuxième zone de séjour partielle (112),
- dans lequel la bande de nids (120) présente un premier ensemble de nids (200) avec un premier canal à œufs (210),
**caractérisé en ce que**
la bande de nids (120) présente en outre un deuxième ensemble de nids (300) avec un
deuxième canal à œufs (310).

2. Dispositif d'élevage (100) selon la revendication précédente,
- **caractérisé en ce que** le premier canal à œufs est disposé entre le premier ensemble de nids (200) et la deuxième zone de séjour partielle, et/ou
- **caractérisé en ce que** le deuxième canal à œufs est disposé entre le deuxième ensemble de nids (300) et la première zone de séjour partielle, et/ou
- **caractérisé en ce que** le premier canal à œufs et le deuxième canal à œufs sont parallèles l'un à l'autre et/ou sont parallèles à la direction longitudinale de la bande de nids (120).

3. Dispositif d'élevage (100) selon au moins l'une quelconque des revendications précédentes,
- **caractérisé en ce qu'**une section de recouvrement du premier canal à œufs est pourvue d'un premier recouvrement, dans lequel de préférence le premier recouvrement est formé en partie par le premier ensemble de nids (300) et en partie par un fond de recouvrement (140), dans lequel le fond de recouvrement est réalisé de préférence pour servir de surface utile aux volailles, et/ou
- **caractérisé en ce qu'**une section de recouvrement du deuxième canal à œufs est pourvue d'un deuxième recouvrement, dans lequel de préférence le deuxième recouvrement est réalisé en partie par le deuxième ensemble de nids (200) et en partie par un fond de recouvrement, dans lequel le fond de recouvrement (140) est réalisé de préférence pour servir de surface utile aux volailles.

4. Dispositif d'élevage (100) selon au moins l'une quelconque des revendications précédentes,
- **caractérisé en ce qu'**une sous-section (212) du premier canal à œufs s'étend en totalité ou en partie sous le deuxième ensemble de nids (300), et/ou
- **caractérisé en ce qu'**une sous-section du deuxième canal à œufs s'étend en totalité ou en partie en dessous du premier ensemble de nids (200).

5. Dispositif d'élevage (100) selon au moins l'une quelconque des revendications précédentes,
**caractérisé en ce que** le premier ensemble de nids (200) et le deuxième ensemble de nids (300) sont accessibles aux volailles depuis des côtés d'accès différents, de préférence opposés, dans lequel de préférence le côté d'accès (231) du premier ensemble de nids (200) est tourné vers la première zone de séjour partielle et/ou le côté d'accès (331) du deuxième ensemble de nids (300) est tourné vers la deuxième zone de séjour partielle.

6. Dispositif d'élevage (100) selon au moins l'une quelconque des revendications précédentes,
**caractérisé en ce que** le premier ensemble de nids (200) et le deuxième ensemble de nids (300) sont disposés l'un derrière l'autre et/ou sont espacés l'un de l'autre dans le sens longitudinal de la bande de nids (120), de préférence par un passage (130), dans lequel le passage présente de préférence un recouvrement de passage (131), en particulier un recouvrement de passage pour des sections de passage du premier canal à œufs et/ou du deuxième canal à œufs, dans lequel de préférence le recouvrement de passage est réalisé pour servir de surface utile aux volailles.

7. Dispositif d'élevage (100) selon au moins l'une quelconque des revendications précédentes,
- **caractérisé en ce que** la première zone de séjour partielle (111) est inclinée vers la bande de nids (120), et/ou
- **caractérisé en ce que** la première zone de séjour partielle (111) présente un ou plusieurs dispositifs d'alimentation (3) et/ou un ou plusieurs abreuvoirs et/ou une ou plusieurs perches d'assise (9), et/ou
- **caractérisé en ce que** la deuxième zone de séjour partielle (112) est inclinée vers la bande de nids (120), et/ou
- **caractérisé en ce que** la deuxième zone de séjour partielle (112) présente un ou plusieurs dispositifs d'alimentation (3) et/ou un ou plusieurs abreuvoirs et/ou une ou plusieurs perches d'assise (9).

8. Dispositif d'élevage (100) selon au moins l'une quelconque des revendications précédentes,
- **caractérisé en ce que** le premier canal à œufs est disposé pour recevoir des œufs du premier ensemble de nids (200) et/ou de la deuxième zone de séjour partielle (112), de préférence par une fente de réception d'œuf (150), et/ou
- **caractérisé en ce que** le premier canal à œufs est disposé en dessous d'une extrémité inférieure de la première zone de séjour partielle (111) et/ou en dessous d'une extrémité inférieure de la deuxième zone de séjour partielle (112), et/ou
- **caractérisé en ce que** le premier canal à œufs présente un premier dispositif de transport, de préférence un convoyeur, pour le transport d'œufs dans le sens longitudinal de la bande de nids (120), et/ou
- **caractérisé en ce que** le deuxième canal à œufs est disposé pour recevoir des œufs du deuxième ensemble de nids (300) et/ou de la première zone de séjour partielle (111), de préférence par une fente de réception d'œuf (150), et/ou
- **caractérisé en ce que** le deuxième canal à œufs est disposé sous une extrémité inférieure de la première zone de séjour partielle (111) et/ou sous une extrémité inférieure de la deuxième zone de séjour partielle (112), et/ou
- **caractérisé en ce que** le deuxième canal à œufs présente un deuxième dispositif de convoyage, de préférence un convoyeur, pour le transport d'œufs dans le sens longitudinal de la bande de nids (120).

9. Dispositif d'élevage (100) selon au moins l'une quelconque des revendications précédentes,
- **caractérisé en ce que** la première zone de séjour partielle (111) est réalisée comme un fond grillagé (8) et/ou présente une inclinaison, de préférence régulière, de préférence vers le bas en direction de la bande de nids (120), et/ou
- **caractérisé en ce que** la deuxième zone de séjour partielle (112) est réalisée comme un fond grillagé (8) et/ou présente une inclinaison, de préférence régulière, de préférence vers le bas en direction de la bande de nids (120).

10. Dispositif d'élevage (100) selon au moins l'une quelconque des revendications précédentes,
- **caractérisé en ce que** le premier ensemble de nids (200) présente un, deux ou plusieurs nids de ponte individuels et/ou familiaux, et/ou
- **caractérisé en ce que** le deuxième ensemble de nids (300) présente un, deux ou plusieurs nids de ponte individuels et/ou familiaux, et/ou
- **caractérisé en ce qu'**un, plusieurs ou tous les nids de ponte individuels et/ou familiaux du premier ensemble de nids (200) et/ou du deuxième ensemble de nids (300) est/sont réalisé(s) en tant que nid à fond basculant et/ou en tant que nid avec ou sans dispositif d'éjection, et/ou
- **caractérisé en ce qu'**un, plusieurs ou tous les nids de ponte individuels et/ou familiaux du premier ensemble de nids (200) et/ou du deuxième ensemble de nids (300) présente(nt) une entrée de nid surélevée, de préférence par rapport à la première ou à la deuxième zone de séjour partielle (111, 112).

11. Dispositif d'élevage (100) selon au moins l'une quelconque des revendications précédentes,
**caractérisé par** plusieurs premiers et plusieurs deuxièmes ensembles de nids (200, 300) qui sont disposés les uns derrière les autres et/ou sont espacés les uns des autres respectivement en alternance dans le sens longitudinal de la bande de nids (120).

12. Poulailler pour l'élevage de volailles, en particulier de poules pondeuses, comprenant un dispositif d'élevage (100) selon au moins l'une quelconque des revendications précédentes.

13. Procédé d'élevage de volailles, en particulier de poules pondeuses, comprenant :
- la mise à disposition d'un dispositif d'élevage (100) selon au moins l'une quelconque des revendications précédentes dans un poulailler, en particulier dans un poulailler à poules pondeuses,
- la collecte d'œufs dans le premier canal à œufs et/ou dans le deuxième canal à œufs.

14. Utilisation d'un dispositif d'élevage (100), selon au moins l'une quelconque des revendications précédentes, pour l'élevage de volailles, en particulier de poules pondeuses, dans un poulailler, de préférence dans un poulailler selon la revendication 12 et/ou dans un procédé d'élevage de volailles, en particulier de poules pondeuses, de préférence dans un procédé selon la revendication 13.
